# EUROPEAN PATENT SPECIFICATION

(11) **EP 1 077 023 B1**
(45) Date of publication and mention of the grant of the patent: **17.12.2003**
(21) Application number: 00500186.2
(22) Date of filing: 11.08.2000
(51) Int. Cl.: A01C 11/02

(54) **Automatic vegetable plant transplanter**
Automatischer Gemüseverpflanzer
Repiqueuse automatique de légumes

(30) Priority: 19.08.1999 ES 9902200 U
(43) Date of publication of application: 21.02.2001
(73) Proprietor: Semirec, S.L., 30594 Murcia (ES)
(72) Inventor: Lijon Garcia, Francisco Gabriel, Pozo Estrecho, Cartagena, Murcia (ES); Bernal Cava, Fulgencio, Pozo Estrecho, Cartagena, Murcia (ES)
(74) Representative: Esteban Perez-Serrano, Maria Isabel

(56) References cited:
- EP-A- 0 900 516
- US-A- 4 869 637
- US-A- 4 893 571
- US-A- 5 676 072

## Description

The object of the present invention is an automatic vegetable plant transplanter, that is, as its title indicates, it relates to a machine which in an automatic manner carries out the process of transplanting from the pot or receptacle in which the plant is lodged into the ground by means of the machine object of the present application.

From the foregoing it concerns a machine which shall assist in the process of planting vegetable plants, which as is known if not done automatically they must be planted by hand, with the associated labour and cost involved.

That is, the object of the present application lies within the agricultural machinery for the automatic planting of vegetable plants.

### BACKGROUND TO THE INVENTION

To date the means for carrying out the planting of vegetable plants, which have been sown previously in seed trays or pots, which plants for their subsequent development have to be transplanted into the ground for an adequate development, are manual, there possibly being some automated job like for example the dibbling of the ground, or once the plant has been situated in the ground, the pressing down of the same.

The applicant is unaware of any machine which in an automatic manner is capable of removing the root ball from the pot in which it is lodged, the dibbling of the ground, the placing of the plant on the ground in an upright position and the subsequent earthing up of the soil, all this being done in an automatic manner without intervention whatsoever of the operative and thanks to a machine like that described hereunder.

It is known from the state of the art the automatic transplanting machine as the one disclosed in EP900561, which comprises a feeder for moving forward a tray, which have a plurality of receptacles or cells for holding the plants for been transferred, it also comprises means for extracting the plants from the receptacles and place them vertically previously to be inserted in the earth. In such machines there is not any indication of how to proceed to place vertically the plants in the earth and how to earth-up the earth around the plants immediately after they have placed in the earth.

### DESCRIPTION OF THE INVENTION

The invention proposed for automatic transplanter of vegetable plants, consists of a machine which shall perform various functions, which are:
◆ Removal of the plant from the tray
◆ Dibbling of the ground
◆ Placing of the plant in the ground
◆ Subsequent earthing up of the ground.

For carrying out the foregoing activities the machine is made up of a series of mechanisms which are described below.

Normally plants are distributed in trays so that the root balls are contained in receptacles or small pots. Once the tray has been placed on the feeder, by means of some pusher rods, the root ball is removed from the receptacle by propelling it outwards, at which time the conveyor pincers grasp the root ball which has just been removed from the receptacle. Once the root ball is removed from the receptacle and being held by means of pincers, the root ball is placed on the horizontal conveyor belt.

The plants are transported on this belt to end thereof where a moving comb causes them to be inserted between some vertical rubber bands which support the root ball and transport it until the neck of the plant is grasped by two convergent wheels, which serve to locate the plant in the ground in an upright position.

Prior to the action described above it is necessary for the ground to be dibbled, which action being done by a coulter, which is mounted on the front part of the machine, in order to enable the placing of the root ball in the earth. Once the plant is in place, there come some earthing-up discs, which serve to earth up the ground around the root ball leaving the plant at the desired depth.

The machine moves forward in a straight line continuously performing the operations already described. In the measure that the plants are withdrawn from the tray, the latter is progressively displaced by the feeder until it is empty of plants, at which time the operative is alerted, either by an audible signal or by stopping, the operative then being required to mount another plant tray.

### DESCRIPTION OF THE DRAWINGS

To complement the description to be given below and with the object of assisting in a better understanding of its features, a set of drawings is attached to this descriptive specification, in which in an illustrative and not restrictive manner, the most significant details of the invention are illustrated.

Figure 1. - Shows part of the automatic transplanting machine for vegetable plants, specifically the parts that serve to withdraw the root ball from the receptacle.

Figure 2. - Shows the parts of the machine that serve to dibble the ground and insert the plant in the hole where it is subsequently earthed up.

### PREFERRED EMBODIMENT OF THE INVENTION

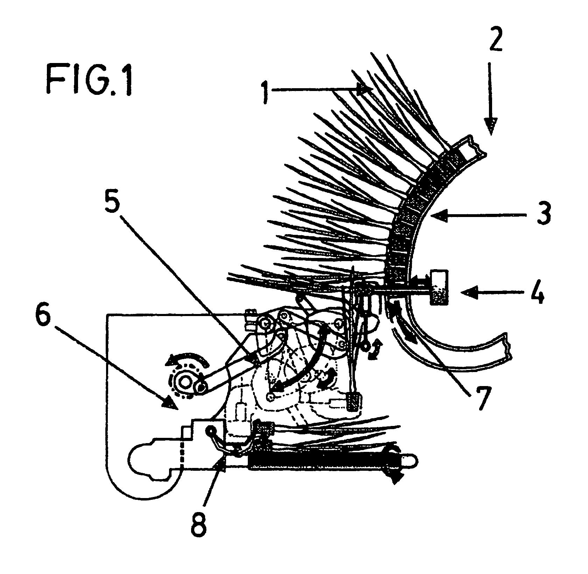

In figure 1 can be seen the different elements that constitute the automatic transplanting machine for vegetable plants, in which can be seen how the plants (1) with their root ball (3) are lodged in the receptacles of the tray (2). Said receptacles move forward, until some pusher rods (4) remove the root ball (3) from the receptacle, at which time they are grasped by some supporting pincers (7). The supporting pincers (7) form part of the conveyor mechanism of the root balls (3) up to the horizontal conveyor belt (9). Said mechanism of the conveyor (5) is fixed to the frame (6) and by means of the pincers (7) has the job of placing in a horizontal position the plant (1) together with its root ball (3) on the horizontal conveyor belt (9).

Once the plants (1) are positioned on the horizontal conveyor belt (9), they are lifted off the belt by means of a comb (8) which serves to insert the plants (1) into some vertical rubber belts.

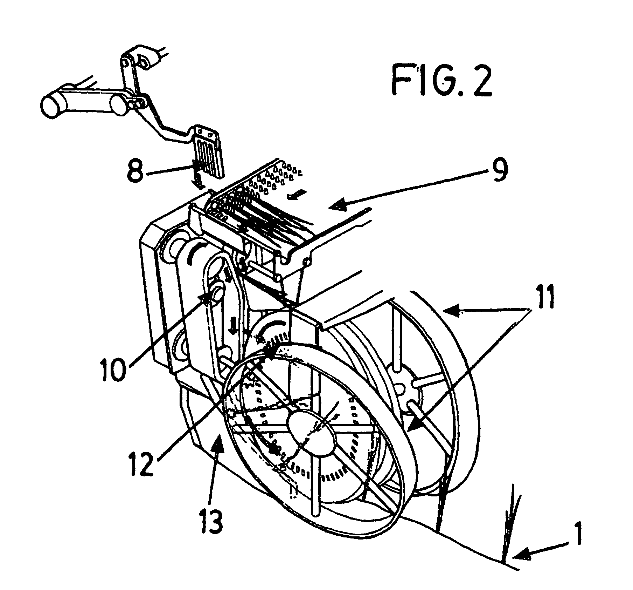

In figure 2, where the rest of the machinery can be seen, the vertical rubber belts (10) in which the plants (1) are inserted can be observed, said plants having been removed from the horizontal conveyor belt (9) by means of a comb (8). The vertical rubber belts (10) in their rotating motion transfer the plant (1) to the convergent discs (12), which serve to grasp the neck of the plant and by means of the rotational movement of said convergent discs (12), place the plant (1) in an upright position in the ground with the root ball inserted in the soil. Prior to this action the ground has been opened by means of a furrowing coulter (13) which is mounted in front of the convergent discs (12). And, finally, on the rear part of the machine, to conclude the operation once the plant (1) is in position, with its root ball in the ground, come the earthing-up wheels which serve to apply sufficient soil to the root ball (3) to close the furrow thereby leaving the plant (1) buried up to the desired height.

All the aforementioned elements work automatically in a coordinated manner, without intervention on the part of the operative. The tray (2) moves forward continuously as the root balls (3) are withdrawn from the tray (2) until the tray is exhausted, at which time a signal is produced to warn the operative or else the machine is halted, it being necessary to mount another tray.

It is not considered necessary to extend further this description for any expert in the matter to understand the scope of the invention and the benefits which accrue therefrom.

The materials, shape, size and arrangement of the elements shall be capable of variation provided that they do not alter its essential nature of the invention.

The terms in which this descriptive specification has been written must always be taken in the broad sense and not restrictively.

## Claims

1. Automatic transplanting machine for vegetable plants which comprises a feeder which causes a tray (2) to move forward, the tray having a series of receptacles, which holds the plants (1); at the end of the feeder there is a pusher rod (4) which removes the root ball (3) from the receptacle of the tray (2), incorporating some pincers (7) which grasp the root ball (3), said pincers form part of the conveyor mechanism (5) which is fixed to a frame (6), it also has a horizontal conveyor belt (9), on which the conveyor mechanism lays the plants (1), it also has a furrowing coulter (13) for opening the ground **characterized in that** the plants are removed from the horizontal conveyor belt (9) by means of a comb (8), being conveyed by vertical rubber belts (10) to some convergent discs (12) which clasp the neck of the plant (1) prior to place such plant in upright position in the ground, using earthing-up wheels (11) mounted at the rear of the machine, so the root ball (3) is covered by soil, having a warning device to indicate when the tray (2) is exhausted, either by audible signal or by halting the machine.

## Patentansprüche

1. Automatische Transplantiermaschine für Gemüsepflanzen, die über einen Beschicker verfügt, der ein Tablett (2) nach vorne bewegt, wobei das Tablett eine Reihe von Aufnahmevorrichtungen hat, die die Pflanzen (1) halten; am Ende des Beschickers befindet sich eine Antriebsstange (4), die den Wurzelballen (3) von den Aufnahmevorrichtungen des Tabletts (2) entfernt und Zangen (7) besitzt, die den Wurzelballen (3) greifen, wobei diese Zangen Teil des Fliessbandmechanismus (5), der an einen Rahmen (6) angebracht ist und auch über ein horizontales Fliessband (9) verfügt, auf das der Mechanismus die Pflanzen (1) legt und ausserdem eine Furchegge (13), um die Erde zu öffnen, **dadurch gekennzeichnet, dass** die Pflanzen von dem horizontalen Fliessband (9) durch einen Kamm (8) weggenommen werden und durch vertikale Plastikbänder (10) zu konvergierenden Scheiben (12) transportiert werden, die den Stiel der Pflanze (1) erfassen, bevor diese Pflanze in aufrechter Position in den Boden gesetzt wird, wofür Aufschütträder (11) eingesetzt werden, die sich am hinteren Ende der Maschine befinden, so dass der Wurzelballen (3) durch Erde bedeckt wird, wobei eine Warnvorrichtung entweder durch ein akkustisches Signal oder durch Stoppen der Maschine anzeigt, wenn das Tablett (2) leer ist.

## Revendications

1. Machine à transplanter automatique pour des plants végétaux qui comprend un alimentateur qui fait qu'un plateau (2) soit déplacé en avant, le plateau ayant une série de réceptacles qui maintiennent les plants (1); à l'extrémité de l'alimentateur il y a une tige de poussée (4) qui retire la motte (3) du réceptacle du plateau (2), en incorporant des pinces (7) qui saisissent la motte (3), lesdites pinces font parties du mécanisme transporteur (5) qui est fixé à un châssis (6), elle a aussi une bande transporteuse horizontale (9), sur laquelle le mécanisme transporteur dépose les plantes (1), elle a aussi un soc sillonneur (13) pour ouvrir la terre **caractérisée en ce que** les plants sont retirés de la bande transporteuse horizontale (9) au moyen d'un peigne (8), ceux-ci étant transportés par des bandes en caoutchouc verticales (10) vers des disques convergents (12) qui saisissent le collet du plant (1) avant de mettre en place ledit plant en position verticale sur le sol, en utilisant des roues de chaussage (11) montées à l'arrière de la machine, de cette manière la motte (3) est recouverte de terre, en ayant un dispositif d'avertissement pour indiquer l'épuisement du contenu du plateau (2), bien par un signal audible ou bien par l'arrêt de la machine.
